# EUROPÄISCHE PATENTSCHRIFT

(11) **EP 2 608 174 B1**
(45) Veröffentlichungstag und Bekanntmachung des Hinweises auf die Patenterteilung: **19.10.2016**
(21) Anmeldenummer: 11194708.1
(22) Anmeldetag: 20.12.2011
(51) Int. Cl.: G08B 17/107

(54) **Verfahren zur Erkennung eines Störobjektes in einem Streuvolumen eines optischen Brandmelders und optischer Brandmelder**
Method for detecting an obstruction in a scatter volume of an optical fire alarm and optical fire alarm
Procédé de reconnaissance d'un objet parasite dans un volume de diffusion d'un détecteur d'incendie optique et détecteur d'incendie optique

(43) Veröffentlichungstag der Anmeldung: 26.06.2013
(73) Patentinhaber: Siemens Schweiz AG, 8047 Zürich (CH)
(72) Erfinder: Vollenweider, Walter, 6312 Steinhausen (CH)
(74) Vertreter: Maier, Daniel Oliver

(56) Entgegenhaltungen:
- EP-A1- 0 076 338
- EP-A1- 0 530 723
- EP-A2- 2 112 639
- DE-A1- 10 118 913

## Beschreibung

Die Erfindung betrifft ein Verfahren zur Erkennung eines Störobjektes in einem Streuvolumen eines optischen Brandmelders, der nach dem Streulichtprinzip arbeitet. Darüber hinaus betrifft die Erfindung einen optischen Brandmelder.

In optischen Rauchmeldern kann es geschehen, dass durch Fremdkörper, wie beispielsweise ein Insekt, ein Fehlalarm ausgelöst wird. Es kann deshalb zweckmäßig sein, mehrere Sensorsysteme zu verwenden, die benachbarte Volumina überwachen. Wenn diese Sensorsysteme denselben oder einen ähnlichen Wert der gestreuten Strahlung ermitteln, kann angenommen werden, dass die Streuung durch ein einigermaßen homogenes Medium erfolgt. Somit kann angenommen werden, dass es sich mit großer Wahrscheinlichkeit um Rauch handelt. Falls dagegen stark unterschiedliche Werte ermittelt werden, muss es sich um ein sehr inhomogenes Medium handeln. Es könnte sich hier um Rauch handeln, der in Schwaden auftritt. Allerdings ist auf Grund der praktischen Erfahrung bekannt, dass der Rauch aus einem der normalerweise auftretenden Feuer einigermaßen gleichmäßig in der Umgebung eines Brandmelders eintrifft, so dass ein oberer Wert für die Inhomogenität angenommen werden kann. Falls der Unterschied der gemessenen Werte über dieser Grenze liegt, muss angenommen werden dass die Streuung durch beispielsweise stoßweise auftretenden Staub, durch Dampfschwaden, durch ein Insekt oder durch ein anderes Objekt verursacht wird. In diesem Fall ist es zulässig, keinen Alarm, sondern eine Störungsmeldung zu erzeugen oder zumindest den Alarm zu verzögern.

Entsprechende Anordnungen sind seit langem bekannt. So ist beispielsweise in WO 2005/069242 die Verwendung örtlich beabstandeter Streuvolumen und der Vergleich des in diesen Volumen gestreuten Lichts beschrieben. Aus dem Ergebnis des Vergleiches wird dann auf das Vorhandensein eines Störkörpers geschlossen. In diesem Fall ist es erforderlich, mit geeigneten Mitteln getrennte Volumen zu bestimmen, was einen gewissen Aufwand erfordert und insbesondere nicht ohne Konstruktionselemente geschehen kann, die einen gewissen Bauplatz einnehmen.

Es ist sogar eine Anordnung bekannt, mit der es mit mechanischen Mitteln möglich ist, den ausgesendeten Lichtstrahl gezielt abzulenken und so das Streuvolumen in der Art eines Suchscheinwerfers nach störenden Objekten abzusuchen. Auch diese Anordnung verursacht einen erhöhten Aufwand und benötigt viel Platz.

In Fällen, in denen ein besonders kleines Volumen der Sensoren erwünscht ist, beispielsweise in einem Melder, der besonders flach sein soll, so dass er unauffällig unter der Decke montiert werden kann, stören diese zusätzlichen Mittel zur Definition getrennter Streuvolumen sehr stark.

Eine Aufgabe der vorliegenden Erfindung ist es, bei geringem Bauraum für den Brandmelder mit einfachen konstruktiven Mitteln eine erhöhte Störsicherheit zu erreichen.

Diese Aufgabe wird durch ein Verfahren nach Anspruch 1 bzw. einen Brandmelder nach Anspruch 10 gelöst.

Vorteilhafte Ausführungen der Erfindung sind in den Unteransprüchen angegeben. Die im Folgenden im Zusammenhang mit dem Verfahren erläuterten Vorteile und Ausgestaltungen gelten sinngemäß auch für den erfindungsgemäßen Brandmelder und umgekehrt.

Das erfindungsgemäße Verfahren zur Erkennung eines Störobjektes in einem Streuvolumen eines optischen Brandmelders, der nach dem Streulichtprinzip arbeitet, zeichnet sich dadurch aus, dass wenigstens zwei Streulichtanordnungen verwendet werden, dass die gemessenen Strahlungen in Streusignale umgewandelt werden und dass die Streusignale zur Erkennung eines Störobjektes anschließend ausgewertet werden, indem sie miteinander verglichen werden. Dabei ist es vorgesehen, dass die gemessenen Strahlungen aus einem gemeinsamen Streuvolumen gewonnen werden.

Eine Grundidee der Erfindung ist es, die gewünschte Störsicherheit zu erreichen, ohne dass getrennte Streuvolumina erforderlich sind. Zu diesem Zweck wird ein gemeinsames Streuvolumen verwendet. Erfindungsgemäß stimmen hierfür die Streuvolumen der zum Einsatz kommenden wenigstens zwei Streulichtanordnungen wenigstens teilweise überein. Das bedeutet, dass sich die wenigstens zwei Streuvolumen wenigstens teilweise überschneiden. Ein besonders einfacher Aufbau ist möglich, wenn es nur ein einziges Streuvolumen gibt, die Streuvolumen der verwendeten Streulichtanordnungen also identisch sind.

Vorteilhafterweise wird dies dadurch erreicht, dass die Sender und Empfänger eine Sende- bzw. Empfangscharakteristik aufweisen, die im Wesentlichen dem Lambert'schen Typ entspricht. Gemäß der Strahlcharakteristik eines Lambertstrahlers strahlt dieser Licht bis ins Unendliche ab, und zwar mit einer Intensität, die abnimmt, wenn der Winkel zwischen einem ausgesendeten Strahl und der Oberfläche des Strahlers kleiner wird, wobei die Intensität aber von der Richtung unabhängig ist, wenn dieser Winkel einen bestimmten Wert hat. Mit der gleichmäßigen Abstrahlung ist also eine ungleichmäßige Beleuchtung verbunden. Anders ausgedrückt wird das gemeinsame Streuvolumen ungleichmäßig beleuchtet.

Leuchtdioden, die mit einer durchsichtigen Abdeckung versehen sind, die nicht in der Art einer Linse ausgebildet, sondern im wesentlichen flach sind, sind annähernd Lambert-Strahler, und werden daher vorzugsweise als Sender in den erfindungsgemäßen Streulichtanordnungen verwendet.

Versteht man unter dem Streuvolumen einer Streulichtanordnung den Schnittbereich der Strahlengänge von Sender und Empfänger, und entspricht das Strahlungsdiagramm von Sender und Empfänger im Wesentlichen dem Lambert'schen Typ, schneiden sich die Strahlengänge von Sender und Empfänger überall. Bei den erfindungsgemäßen Streulichtanordnungen gibt es mit anderen Worten kein wohldefiniertes Streuvolumen.

Gemäß dem erfindungsgemäßen Aufbau werden keine Trennwände verwendet, um die Streuvolumen der verwendeten Streulichtanordnungen voneinander abzugrenzen. Zwischen den Sendern und Empfängern können sich jedoch Wände befinden, die verhindern, dass Licht auf direktem Weg, ohne von Rauchpartikeln gestreut zu werden, vom Sender zum Empfänger gelangt.

Erfindungsgemäß wird das gemeinsame Streuvolumen unter verschiedenen Winkeln betrachtet. Dies wird dadurch sichergestellt, dass die verwendeten Streulichtanordnungen unterschiedliche Strahlengänge aufweisen. Vorteilhafterweise wird dies erreicht, indem sich die Streulichtanördnungen zumindest durch die geometrische Anordnung wenigstens einer ihrer optischen Komponenten voneinander unterscheiden.

Ein besonders geringer konstruktiver Aufwand ist erforderlich und besonders wenig Bauraum wird benötigt, wenn die Streulichtanordnungen gemeinsam genutzte Sender oder Empfänger verwenden. Mit anderen Worten teilen sich die eine Streulichtanordnung wenigstens einen Sender oder wenigstens einen Empfänger mit der anderen Streulichtanordnung.

Im einfachsten Fall werden zwei getrennt voneinander angeordnete Sender mit einem gemeinsamen Empfänger konibiniert, so dass der erste Sender und der Empfänger die erste Streulichtanordnung und der zweite Sender und der Empfänger die zweite Streulichtanördnung bilden. In diesem Fall ergeben sich die unterschiedlichen Strahlengänge durch die verschiedenen Strahlungsachsen.

Alternativ dazu kann ein Sender mit zwei getrennt voneinander angeordneten Empfängern verwendet werden, wobei der Sender mit dem ersten Empfänger die erste Streulichtanordnung und der Sender mit dem zweiten Empfänger die zweite Streulichtanordnung bildet. Die unterschiedlichen Strahlengänge ergeben sich dann durch die verschiedenen Empfangsachsen.

In einer weiteren Ausführungsform der Erfindung werden mehrere Sender und mehrere Empfänger verwendet. Dies ist besonders deshalb von Vorteil, weil mit jeder Kombination eines Senders und eines Empfängers ein Empfangssignal bestimmt werden kann. Die Gesamtheit der Empfangssignale können von einem geeigneten Algorithmus verwendet werden, um Störobjekte von Rauch zu unterscheiden. Mit jeder zusätzlichen Eingangsgröße kann der Algorithmus diese Aufgabe besser und zuverlässiger erfüllen. Darüber hinaus können jeweils ein Sender und ein Empfänger so zusammengefasst werden, dass die den Eindruck einer Einheit erwecken. Wenn zwei Sender vorhanden sind und der Empfänger in der Mitte zwischen den beiden Sendern angeordnet wird, sind drei optische Einheiten sichtbar. Wenn dagegen je ein Sender und ein Empfänger zu einer Einheit zusammengefasst werden, sind lediglich zwei optische Einheiten sichtbar.

In einer Weiterführung des der vorliegenden Erfindung zu Grunde liegenden Kerngedankens können ein oder mehrere Sender verwendet werden, die Licht verschiedener Wellenlängen aussenden. Hierdurch ergeben sich weitere, besonders vorteilhafte Konfigurations- und Auswertemöglichkeiten.

Die Auswertung der Streusignale erfolgt durch Vergleich, wobei vorteilhafterweise ihr Quotient bestimmt und der Quotient mit einem unteren und einem oberen Grenzwert verglichen wird.

Eine weiterführende Auswertung kann dadurch erfolgen, dass der zeitliche Verlauf des Quotienten aufgezeichnet und mit bekannten Mustern verglichen wird.

Mit der vorliegenden Erfindung kann mit einfachen konstruktiven Mitteln und damit besonders preiswert eine erhöhte Störsicherheit erreicht werden, indem Störobjekte sicher von Rauchpartikeln unterschieden werden können. Die Ausführung des Brandmelders ist einfach und vergleichsweise platzsparend, so dass nur wenig Bauraum benötigt wird. Der Erfindung eignet sich daher besonders für Brandmelder, wie sie beispielsweise in Zimmerdecken einbaubar sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:
- FIG 1: eine Darstellung zur Erläuterung des Prinzips der erfindungsgemäß verwendeten Lichtstreuung mit zwei Sendern und einem Empfänger,
- FIG 2: eine Darstellung mit einem Sender und zwei Empfängern,
- FIG 3: Rückstreusignale in Abhängigkeit von der Teilchengröße bei Verwendung von mehreren Sendern mit verschiedenen Wellenlängen.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

Der nachfolgend beschriebene optische Brandmelder 1 arbeitet als Streulichtrauchmelder und umfasst eine nach dem Streulichtprinzip arbeitende Detektionseinheit 2 und eine damit eine mittels einer Verbindungsleitung 3 verbundene elektronische Auswerteeinheit 4.

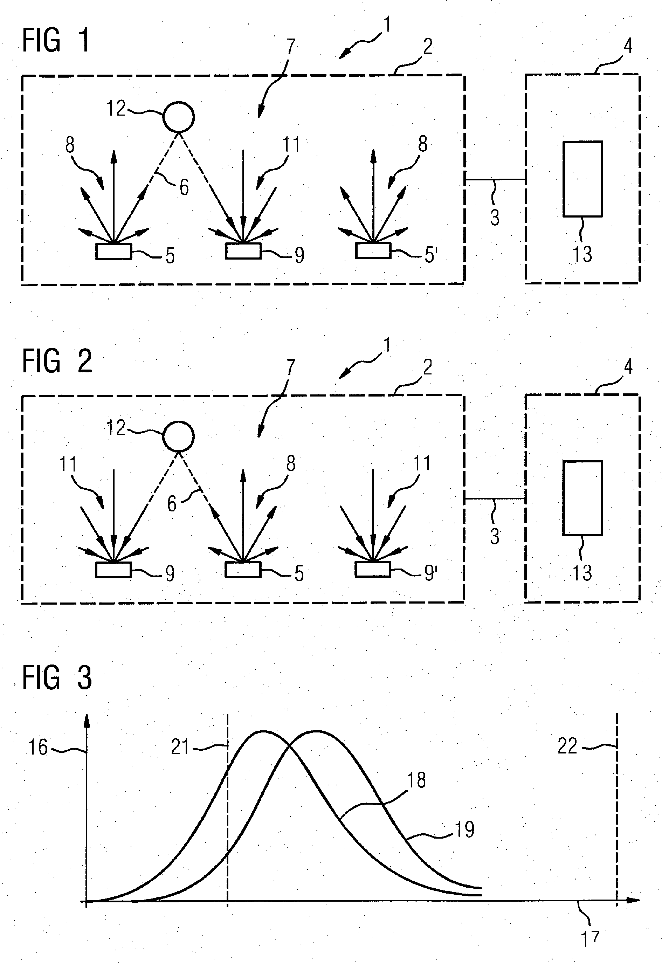

In einer ersten, in FIG 1 dargestellten Konfiguration sendet in der Detektionseinheit 2 eine erste Strahlungsquelle (Sender) 5 Licht einer bestimmten Wellenlänge aus. Dieses Licht gelangt längs einer Strahlungsachse 6 in das Streuvolumen 7 des Brandmelders 1.

Bei dem ersten Sender 5 handelt es sich beispielsweise eine Leuchtdiode ohne zusätzliche optische Elemente, wie Linsen oder Spiegel. Beispielsweise kann es sich um eine LED auf der Basis GaAs oder dergleichen handeln. Der strahlende Teil der Leuchtdiode ist ein Kristall, der als eine gleichmäßig leuchtende Fläche aufgefasst werden kann. In der Folge wird Licht in einer Weise abgestrahlt, die durch ein Strahlungsdiagramm 8 beschrieben wird, wie es in FIG 1 schematisch dargestellt ist und im Wesentlichen dem Lambert'schen Typ entspricht. Der erste Sender 5 leuchtet ein Streuvolumen 7 aus. Dabei reicht das Streuvolumen 7 grundsätzlich bis ins Unendliche. Das Streuvolumen 7 wird aber nicht gleichmäßig, sondern entsprechend dem Strahlungsdiagramm 8 ausgeleuchtet.

Ein von dem ersten Sender 5 beabstandeter zweiter Sender 5' sendet Licht einer bestimmten Wellenlänge aus. Der zweite Sender 5' ist mit dem ersten Sender 5 baugleich und sendet Licht entsprechend einem Strahlungsdiagramm 8 aus, das dem Strahlungsdiagramm des ersten Senders 5 zumindest ähnlich ist. Das Licht des zweiten Senders 5' gelangt längs einer zweiten Strahlungsachse 6 in das identische Streuvolumen 7. Auch dieser zweite Sender 5' leuchtet das Streuvolumen 7 ungleichmäßig und gegebenenfalls bis ins Unendliche aus.

Zum Empfang des gestreuten Lichts wird als optischer Strahlungsempfänger 9 beispielsweise eine Fotodiode verwendet, die im wesentlichen die Eigenschaften einer lichtempfindlichen Fläche hat, so dass ihre Empfangscharakteristik durch ein Strahlungsdiagramm 11 beschrieben werden kann, das wiederum im wesentlichen dem Lambert'schen Typ entspricht. Der Empfänger 9 empfängt Licht aus dem gemeinsamen Streuvolumen 7, wobei grundsätzlich und gegebenenfalls auch Licht empfangen wird, das aus dem Unendlichen zurückgestrahlt wird.

In dem Streuvolumen 7 befindet sich ein zu detektierender Körper 12. Es kann sich hierbei um ein Rauchpartikel oder auch um ein störendes Objekt wie beispielsweise ein Staubteilchen, ein Insekt oder ein anderes großes Objekt handeln.

Licht von dem ersten Sender 5 fällt auf dem Pfad auf diesen Körper 12 und wird auf den Empfänger 9 zurückgestreut. Es gelangt ebenfalls Licht von dem zweiten Sender 5' auf den Körper 12 und wird auf den Empfänger 9 zurückgestreut. Aus Gründen der Übersichtlichkeit ist dieser zweite Pfad in FIG 1 jedoch nicht eingezeichnet.

Weil sich der Pfad von dem ersten Sender 5 zu dem Körper 12 von dem Pfad von dem zweiten Sender 5' zu diesem Körper 12 unterscheidet, wird von den beiden Sendern 5, 5' ungleich viel Licht zum Empfänger 9 zurückgestreut, es sei denn, dass sich das Objekt 12 zufälligerweise in einer Lage befindet, in der die Anordnung symmetrisch wird. Indem das zurückgestreute, aus dem ersten Sender 5 und dem zweiten Sender 5' stammende Licht verglichen wird, kann abgeschätzt werden, wie weit der Körper 12 von einer symmetrischen Lage entfernt ist.

Falls der Körper 12 ein Rauchpartikel und Teil einer einigermaßen homogenen Rauchwolke ist, kann die oben beschriebene Beobachtung nicht gemacht werden. Es sind in diesem Fall sehr viele und gleichmäßig verteilte Körper vorhanden. Diese Körper streuen im einzelnen Licht, das von den beiden Sendern 5, 5' stammt, in ungleichmäßiger Weise zurück. In der Gesamtheit gleichen sich die Unterschiede aber aus, so dass ungefähr gleich viel Licht von beiden Sendern 5, 5' zu dem Empfänger 9 zurückgestreut wird.

Wird ungleich viel Licht von beiden Sendern 5, 5' zu dem Empfänger 9 zurückgestreut, handelt es sich bei dem Körper 12 mit großer Wahrscheinlichkeit um ein Störobjekt, wie weiter unten im Zusammenhang mit der Auswertung der Streusignale ausführlicher beschrieben werden wird.

Neben der Detektionseinheit 2, in der die gemessenen Strahlungen nach der Aufnahme durch den Empfänger 9 in Streusignale umgewandelt werden, ist in FIG 1 auch die elektronische Auswerteeinheit 4 dargestellt, in der die Streusignale ausgewertet werden. Die Auswertung erfolgt dabei in Form eines Vergleiches der ermittelten Streuintensitäten. Anschließend erfolgt ein Vergleich mit gespeicherten Werten und/oder eine Bewertung der Ergebnisse anhand anderer Kriterien. Im Anschluss daran wird ergebnisabhängig mindestens ein Alarmsignal erzeugt oder aber eine Störungsmeldung erzeugt bzw. ein Alarm verzögert.

Die elektronische Auswerteeinheit 4 wird vorzugsweise durch eine prozessorgeschützte Verarbeitungseinheit, wie z. B. durch einen Mikrocontroller 13, realisiert. Dieser weist vorzugsweise integrierte Änalog/Digital-Umsetzer zur Erfassung der beiden Streulichtsignale sowie Digital/Analog-Umsetzer und/oder digitale Ausgangsports für die Ausgabe der Ergebnissignale bzw. der Brandalarme auf. Die Mittel der Auswerteeinheit 4 werden vorzugsweise durch geeignete Programmschritte einer Software nachgebildet, die auf dem Mikrocontroller 13 ausgeführt werden.

Durch die im Zusammenhang mit FIG 1 beschriebene Anordnung kann der Brandmelder 1 mit insgesamt drei Hauptkomponenten, nämlich zwei Strahlungsquellen (Sendern) 5, 5' und einem Empfänger 9, betrieben werden. Die Verwendung eines zweiten Empfängers ist nicht erforderlich, so dass der konstruktive Aufwand vergleichsweise gering ist.

Alternativ zu dieser Anordnung, bei der die beiden optischen Sender 5, 5' abwechselnd Licht in das Streuvolumen 7 einstrahlen und der gemeinsame optische Empfänger 9 zum Empfang von Strahlung beider Sender 5, 5' ausgebildet ist, ist eine weitere Anordnung möglich, bei der ebenfalls nur drei Komponenten verwendet werden, nämlich ein gemeinsamer Sender 5 und zwei Empfänger 9, 9'. Eine derartige Anordnung ist in FIG 2 dargestellt, wobei die Anordnung der Komponenten der ersten Ausführung mit vertauschten Sendern 5 und Empfängern 9 entspricht. Da im Allgemeinen optische Empfänger 9 teurer als Sender 5 sind, werden die Bauteilkosten dieser Ausführungsvariante höher sein. Dagegen muss nur ein einziger Sender 5 mit elektrischer Leistung versorgt werden, so dass die Leistungsaufnahme und damit die Betriebskosten geringer sind.

Die zurückgestreuten, von zwei Sendern 5, 5' stammenden (FIG 1) oder von zwei Empfängern 9, 9' empfangenen (FIG 2) Signale werden durch die Auswerteeinheit 4 vorzugsweise verglichen, indem ihr Quotient bestimmt wird. Auf diese Weise ist das Ergebnis nicht von der Größe oder der Anzahl der Rauchpartikel oder Störobjekte, sondern nur von ihrer Läge abhängig. Es können aber auch andere zweckmäßige Verfahren angewendet werden, die ein ähnliches Ergebnis liefern. Wenn das zurückstreuende Medium homogen ist, wird der Quotient den Wert 1 annehmen. Dagegen wird der Quotient von 1 verschieden sein, wenn das Medium inhomogen ist oder es sich um ein asymmetrisch liegendes Objekt handelt. Somit kann der Quotient mit einem oberen und einem unteren Grenzwert verglichen werden. Wenn der Quotient über dem oberen oder unter dem unteren Grenzwert liegt, muss es sich um ein inhomogenes Medium oder um ein asymmetrisch liegendes Objekt handeln. In diesem Fall kann mit großer Wahrscheinlichkeit angenommen werden, dass das zurückstreuende Medium nicht Rauch ist. Falls dagegen der Quotient zwischen den Grenzwerten liegt, muss es sich um Rauch oder um ein Objekt handeln, das mit diesen Mitteln nicht von Rauch unterschieden werden kann. Eine weitere Verbesserung der Detektionseigenschaften kann erzielt werden, indem durch die Auswerteeinheit 4 der zeitliche Verlauf des Quotienten aufgezeichnet und mit bekannten Mustern verglichen wird.

In einer weiteren, nicht dargestellten Ausführungsform der Erfindung sind sowohl mehrere Sender 5, 5', als auch mehrere Empfänger 9, 9' vorhanden. Die Anordnung der Sender und Empfänger kann dabei der in WO 2009/103777 beschriebenen Anordnung entsprechen. Die dort beschriebene Sensorvorrichtung eignet sich mit ihrer Differenzbildung besonders gut zur Unterdrückung von Fremdlicht. Zusätzlich zu dem Vorteil einer besonders guten Unterdrückung von Fremdlicht kann bei der vorliegenden Erfindung durch Vergleich der empfangenen Signale mittels Quotientenbildung zugleich ermittelt werden, ob das Licht von einer einigermaßen homogenen Rauchwolke oder von einem asymmetrisch liegenden Objekt zurückgestreut wird. Mit anderen Worten können durch die Bildung des Quotienten bzw. die Bildung mehrerer Quotienten, falls mehr als nur zwei Eingangssignale zur Verfügung stehen, mit der Erfindung zusätzliche Informationen gewonnen werden.

Während bei den oben beschriebenen Ausführungsbeispielen stets Strahlung der gleichen Wellenlänge verwendet wird, werden in einer weiteren bevorzugten Ausführung mehrere Sender verwendet, die Licht auf mehreren verschiedenen Wellenlängen aussenden. In FIG 3 wird gezeigt, wie in diesem Fall die Menge des zurückgestreuten Lichts von der Wellenlänge und der Partikelgröße abhängt. Dabei ist die Intensität 16 des gestreuten Lichts in beliebigen Einheiten über der Partikelgröße 17 in Nanometer aufgezeichnet.

Die Kurve 18 zeigt diese Abhängigkeit für blaues Licht mit einer Wellenlänge von 450 nm. Die Kurve 19 zeigt die Abhängigkeit für infrarotes Licht im Bereich von 900 nm. Eine erste Hilfslinie 21 bezeichnet diejenige Stelle, an der die Rauchpartikel 300 nm groß sind. Rauchpartikel haben häufig eine Größe in diesem Bereich, so dass diese Stelle besonders wichtig ist.

Es ist leicht zu sehen, dass die Menge des bei den beiden Wellenlängen zurückgestreuten Lichts stark unterschiedlich ist. Diese Erscheinung hat eine gewisse Ähnlichkeit mit Resonanzen, die auftreten, wenn die Größe des Partikels im Bereich der Wellenlänge liegt.

Eine zweite Hilfslinie 22 entspricht einem sehr viel größeren Teilchen, beispielsweise einem Staubpartikel oder einem anderen Objekt. Die bei kleineren Objekten beobachteten Erscheinungen treten hier nicht auf. Wenn das Objekt groß ist und eine weiße oder helle Farbe hat, wird das Licht der beiden Wellenlängen in gleicher Weise zurückgestreut, da die Reflexionseigenschaften nicht von der Wellenlänge abhängig sind. Bei kleineren Objekten, wie beispielsweise Rauchpartikeln, sind die Reflexionseigenschaften hingegen von der Wellenlänge abhängig, auch wenn der Rauch beispielsweise weiß erscheint.

Selbstverständlich kann es geschehen, dass das streuende Objekt stark farbig ist. Das bei den beiden Wellenlängen zurück gestreute Licht ist in diesem Fall unterschiedlich. Der Entscheid, ob es sich um Rauch oder ein Objekt handelt, ist in diesem Fall nicht möglich.

Zusätzlich kann geprüft werden, ob das gestreute Licht an mehreren Orten mit gleicher Intensität empfangen wird. Wenn sich das Objekt in einer symmetrischen Lage befindet, kann es auch bei dieser Prüfung ähnliche Signale, wie diejenigen von Rauch erzeugen. Es kann somit nicht ausgeschlossen werden, dass ein stark farbiges Objekt in einer symmetrischen Lage einen Fehlalarm erzeugt. Da dieses Ereignis aber verhältnismäßig unwahrscheinlich ist, kann die Wahrscheinlichkeit eines Fehlalarms stark reduziert werden.

Obwohl die Erfindung im Detail durch das bevorzugte Ausführungsbeispiel näher illustriert und beschrieben wurde, so ist die Erfindung nicht auf die offenbarten Beispiele eingeschränkt und andere Variationen können vom Fachmann hieraus abgeleitet werden, ohne den Schutzumfang der Erfindung zu verlassen.

### Bezugszeichenliste

- 1: Brandmelder
- 2: Detektionseinheit
- 3: Verbindungsleitung
- 4: Auswerteeinheit
- 5: Sender
- 6: Strahlungsachse
- 7: Streuvolumen
- 8: Strahlungsdiagramm des Senders
- 9: Empfänger
- 10: (frei)
- 11: Strahlungsdiagramm des Empfängers
- 12: Körper, Objekt
- 13: Mikrocontroller
- 14: (frei)
- 15: (frei)
- 16: Intensität
- 17: Partikelgröße
- 18: Kurve für blaues Licht
- 19: Kurve für infrarotes Licht
- 20: (frei)
- 21: erste Hilfslinie
- 22: zweite Hilfslinie

## Patentansprüche

1. Verfahren zur Erkennung eines Störobjektes (12) in einem Streuvolumen (7) eines optischen Brandmelders (1), der nach dem Streulichtprinzip arbeitet,
- wobei wenigstens zwei Streulichtanordnungen verwendet werden,
- wobei die gemessenen Strahlungen in Streusignale umgewandelt werden,
- wobei die Streusignale anschließend zur Erkennung eines Störobjektes (12) ausgewertet werden, indem ihre Streulichtintensitäten miteinander verglichen werden,
- wobei die gemessenen Strahlungen aus einem gemeinsamen Streuvolumen (7) gewonnen werden,
- wobei Sender (5, 5') und/oder Empfänger (9, 9') mit einer Sende- bzw. Empfangscharakteristik vom im wesentlichen Lambert'schen Typ verwendet werden und
- wobei die Hauptabstrahlrichtung der Sender (5, 5') sowie die Hauptempfangsrichtung der Sender (9, 9') parallel zueinander liegen.

2. Verfahren nach Anspruch 1, **dadurch gekennzeichnet, dass** sich die Streulichtanordnungen zumindest durch die Anordnung wenigstens einer ihrer optischen Komponenten (5, 5', 9, 9') voneinander unterscheiden.

3. Verfahren nach Anspruch 1 oder 2, **dadurch gekennzeichnet, dass** ein erster Sender (5) und ein Empfänger (9) eine erste Streulichtanordnung und ein zweiter Sender (5'), und der Empfänger (9) eine zweite Streulichtanordnung bilden.

4. Verfahren nach Anspruch 1 oder 2, **dadurch gekennzeichnet, dass** ein Sender (5) und ein erster Empfänger (9) eine erste Streulichtanordnung und der Sender (5) und ein zweiter Empfänger (9') eine zweite Streulichtanordnung bilden.

5. Verfahren nach Anspruch 1 oder 2, **dadurch gekennzeichnet, dass** mehrere Sender (5, 5') und mehrere Empfänger (9, 9') verwendet werden.

6. Verfahren nach einem der Ansprüche 1 bis 5, **dadurch gekennzeichnet, dass** Sender (15) verwendet werden, die Strahlung in unterschiedlichen Wellenlängen aussenden.

7. Verfahren nach einem der Ansprüche 1 bis 6, **dadurch gekennzeichnet, dass** zum Vergleich der Streusignale ihr Quotient bestimmt wird und der Quotient mit einem unteren und einem oberen Grenzwert verglichen wird.

8. Verfahren nach Anspruch 7, **dadurch gekennzeichnet, dass** zum Vergleich der Streusignale der zeitliche Verlauf des Quotienten aufgezeichnet und mit bekannten Mustern verglichen wird.

9. Verfahren nach einem der Ansprüche 1 bis 8, **dadurch gekennzeichnet, dass** die Auswertung der Streusignale in Form eines Vergleichs der ermittelten Streuintensitäten erfolgt, dass anschließend ein Vergleich mit gespeicherten Werten erfolgt und dass im Anschluss ergebnisabhängig mindestens ein Alarmsignal erzeugt oder aber eine Störmeldung erzeugt bzw. ein Alarm unterdrückt wird.

10. Optischer Brandmelder (1) mit einer nach dem Streulichtprinzip arbeitenden Detektionseinheit (2) und einer damit verbundenen elektronischen Auswerteeinheit (4), ausgebildet zur Durchführung eines Verfahrens nach einem der Ansprüche 1 bis 9.

## Claims

1. Method for identifying an obstruction (12) in a scatter volume (7) of an open type optical smoke detector (1), which operates according to the scattered light principle,
- wherein at least two scattered light arrangements are used,
- wherein the measured radiation is converted to scatter signals,
- wherein the scatter signals are then evaluated to identify an obstruction (12), by comparing their scattered light intensities with one another,
- wherein the measured radiation is acquired from a common scatter volume (7),
- wherein transmitters (5, 5') and/or receivers (9, 9') with a transmit and/or receive characteristic essentially of the Lambert type are used, and
- wherein the main transmit direction of the transmitters (5, 5') and the main receive direction of the receivers (9, 9') are parallel to one another.

2. Method according to claim 1, **characterised in that** the scattered light arrangements differ from one another at least in the arrangement of at least one of their optical components (5, 5', 9, 9').

3. Method according to claim 1 or 2, **characterised in that** a first transmitter (5) and a receiver (9) form a first scattered light arrangement and a second transmitter (5') and the receiver (9) form a second scattered light arrangement.

4. Method according to claim 1 or 2, **characterised in that** a transmitter (5) and a first receiver (9) form a first scattered light arrangement and the transmitter (5) and a second receiver (9') form a second scattered light arrangement.

5. Method according to claim 1 or 2, **characterised in that** a number of transmitters (5, 5') and a number of receivers (9, 9') are used.

6. Method according to one of claims 1 to 5, **characterised in that** transmitters (15) are used, which emit radiation at different wavelengths.

7. Method according to one of claims 1 to 6, **characterised in that** to compare the scatter signals their quotient is determined and the quotient is compared with a lower and upper limit value.

8. Method according to claim 7, **characterised in that** to compare the scatter signals the pattern of the quotient over time is recorded and compared with known patterns.

9. Method according to one of claims 1 to 8, **characterised in that** the evaluation of the scatter signals takes place in the form of a comparison of the determined scatter intensities, that a comparison is then made with stored values and that then, depending on the result, at least one alarm signal is generated or a fault message is generated or an alarm is suppressed.

10. Open type optical smoke detector (1) having a detection unit (2) operating according to the scattered light principle and an electronic evaluation unit (4) connected thereto, configured to implement a method according to one of claims 1 to 9.

## Revendications

1. Procédé pour le repérage d'un objet étranger (12) dans un volume de diffusion (7) d'un détecteur d'incendie optique (1) qui fonctionne selon le principe de la lumière diffusée,
- au moins deux dispositifs à lumière diffusée étant utilisés,
- les rayonnements mesurés étant convertis en signaux de diffusion,
- les signaux de diffusion étant ensuite évalués pour le repérage d'un objet étranger (12) par comparaison l'une avec l'autre de leurs intensités de lumière diffusée,
- les rayonnements mesurés étant obtenus à partir d'un volume de diffusion commun (7),
- des émetteurs (5, 5') et/ou des récepteurs (9, 9') avec une caractéristique d'émission et respectivement de réception essentiellement du type de Lambert sont utilisés et
- la direction de rayonnement principal des émetteurs (5, 5') ainsi que la direction principale de réception des émetteurs (9, 9') sont parallèles l'une à l'autre.

2. Procédé selon la revendication 1, **caractérisé en ce que** les dispositifs à lumière diffusée se distinguent l'un de l'autre au moins par l'agencement d'au moins l'un de leurs composants optiques (5, 5', 9, 9').

3. Procédé selon la revendication 1 ou 2, **caractérisé en ce qu'**un premier émetteur (5) et un récepteur (9) constituent un premier dispositif à lumière diffusée et un deuxième émetteur (5') et le récepteur (9) un deuxième dispositif à lumière diffusée.

4. Procédé selon la revendication 1 ou 2, **caractérisé en ce qu'**un émetteur (5) et un premier récepteur (9) constituent un premier dispositif à lumière diffusée et l'émetteur (5) et un deuxième récepteur (9') un deuxième dispositif à lumière diffusée.

5. Procédé selon la revendication 1 ou 2, **caractérisé en ce que** plusieurs émetteurs (5, 5') et plusieurs récepteurs (9, 9') sont utilisés.

6. Procédé selon l'une des revendications 1 à 5, **caractérisé en ce que** l'on utilise des émetteurs (15) qui émettent un rayonnement dans différentes longueurs d'onde.

7. Procédé selon l'une des revendications 1 à 6, **caractérisé en ce que** pour la comparaison des signaux de diffusion, leur quotient est déterminé, et le quotient est comparé avec une valeur limite inférieure et une valeur limite supérieure.

8. Procédé selon la revendication 7, **caractérisé en ce que** pour la comparaison des signaux de diffusion, l'évolution temporelle du quotient est enregistrée et comparée avec des modèles connus.

9. Procédé selon l'une des revendications 1 à 8, **caractérisé en ce que** l'évaluation des signaux de diffusion est effectuée sous la forme d'une comparaison des intensités de diffusion déterminées qui est obtenue après une comparaison avec des valeurs mémorisées et **en ce qu'**est ensuite engendré soit au moins un signal d'alarme fonction du résultat, soit un message de perturbation ou respectivement l'empêchement d'une alarme.

10. Détecteur d'incendie optique (1) avec une unité de détection (2) qui fonctionne selon le principe de la lumière diffusée et une unité d'évaluation (4) électronique qui lui est connectée, conçu pour la mise en oeuvre d'un procédé selon l'une des revendications 1 à 9.
